# EUROPÄISCHE PATENTSCHRIFT

(11) **EP 1 517 779 B1**
(45) Veröffentlichungstag und Bekanntmachung des Hinweises auf die Patenterteilung: **02.03.2011**
(21) Anmeldenummer: 03784012.1
(22) Anmeldetag: 11.07.2003
(51) Int. Cl.: B29C 67/00

(54) **VORRICHTUNG UND VERFAHREN ZUM HERSTELLEN VON DREIDIMENSIONALEN OBJEKTEN MITTELS EINES GENERATIVEN FERTIGUNGSVERFAHRENS**
DEVICE AND METHOD FOR THE PRODUCTION OF THREE-DIMENSIONAL OBJECTS BY MEANS OF A GENERATIVE PRODUCTION METHOD
DISPOSITIF ET PROCEDE POUR PRODUIRE DES OBJETS TRIDIMENSIONNELS AU MOYEN D'UN PROCEDE DE PRODUCTION GENERATIF

(30) Priorität: 02.08.2002 DE 10235427
(43) Veröffentlichungstag der Anmeldung: 30.03.2005
(60) Teilanmeldung: 10186010.4
(73) Patentinhaber: EOS GmbH Electro Optical Systems, 82152 Krailling (DE)
(72) Erfinder: HEUGEL, Martin, 86899 Landsberg-Pitzling (DE)
(74) Vertreter: Hofer, Dorothea
(86) Internationale Anmeldenummer: PCT/EP2003/007536
(87) Internationale Veröffentlichungsnummer: WO 2004/014636

(56) Entgegenhaltungen:
- EP-A- 1 316 408
- DE-A- 19 952 998
- DE-C- 10 108 612
- DE-U- 29 907 262
- US-A- 5 306 447

## Beschreibung

Die vorliegende Erfindung betrifft eine Vorrichtung und ein Verfahren zum Herstellen von dreidimensionalen Objekten nach dem Oberbegriff des Patentanspruchs 1 bzw. des Patentanspruchs 11.

DE 299 07 262 U1 beschreibt eine Vorrichtung zum Herstellen eines dreidimensionalen Objektes mittels rapid prototyping gemäß dem Oberbegriff des Anspruch 1, in der eine Mehrzahl von Bauplattformen an vorgegebenen Positionen auf einem gemeinsamen höhenverstellbaren Träger positionierbar ist. DE 299 07 262 U1 beschreibt auch ein Verfahren gemäß dem Oberbegriff des Anspruchs 11.

DE 199 52 998 A1 beschreibt eine Vorrichtung einer evakuierbaren Bearbeitungskammer, in die wenigstens zwei Teilkammern integriert sind. Eine der Teilkammern ist der Bauraum und die andere der Vorratsbehälter für das Pulver. Bewegbare Böden der Teilkammern werden wechselseitig betätigt. Mit einem Rakel an der Deckplatte der Vorrichtung und einer gesteuerten Bewegung des Rakels und der Böden ist ein Körper in definierter Weise schichtweise realisierbar.

US 5,306,447 beschreibt ein Verfahren und eine Vorrichtung, bei der ein Energiestrahl zum selektiven Abscheiden von Material aus der Gasphase zur Herstellung eines Objektes verwendet wird.

DE 101 08 612 C1 offenbart ein Verfahren und eine Vorrichtung zum selektiven Lesersintern, bei dem ein Bauraum von einer Mantelheizung umschlossen ist und mittels dieser beheizt wird.

Bei generativen Fertigungsverfahren, wie z. B. dem Selektiven Lasersintern, dem selektiven Laserschmelzen, der Stereolithographie, dem 3D-Printing , werden dreidimensionale Objekte schichtweise hergestellt, indem Schichten eines Aufbaumaterials aufgetragen und durch selektives Verfestigen an den dem Querschnitt der Objekte entsprechenden Stellen miteinander verbunden werden.

Ein derartiges Verfahren und eine derartige Vorrichtung sind beispielsweise aus der EP 0 734 842 bekannt, die das selektive Lasersintern von pulverförmigem Aufbaumaterial beschreibt. Dort wird eine erste Schicht eines pulverförmigen Materials auf einen absenkbaren Träger aufgebracht und an den dem Objekt entsprechenden Stellen mit einem Laser bestrahlt, so daß das Material dort zusammensintert. Danach wird der Träger abgesenkt und es wird auf diese erste Schicht eine zweite Schicht aufgebracht und wiederum selektiv gesintert, die dabei mit der ersten Schicht verbunden wird. Dadurch wird das Objekt schichtweise gebildet. Während des Auftragens einer neuen Schicht findet keine Bestrahlung statt. Dadurch wird der Laser als eines der kostenintensivsten Elemente der Lasersinteranlage nicht wirtschaftlich optimal genutzt und die Produktivität der Vorrichtung wird durch Bestrahlungspausen gesenkt. Hinzu kann ein Zeitverlust durch Aufheizen, Abkühlen und andere Verfahrensschritte treten.

Ferner ist es bei einer derartigen Vorrichtung bekannt, mehrere Objekte parallel aufzubauen, wenn diese in den Bauraum passen.

Sollen mehr Bauteile gleichzeitig gefertigt werden, als in den Bauraum passen, so ist dies grundsätzlich durch den parallelen Betrieb mehrerer solcher Vorrichtungen möglich, allerdings ist dies mit hohen Investitionskosten verbunden.

Eine Aufgabe der vorliegenden Erfindung ist es daher, eine Vorrichtung und ein Verfahren bereitzustellen, durch die auf kostengünstige Weise die Produktivität und Wirtschaftlichkeit bei der schichtweisen, generativen Herstellung von dreidimensionalen Objekten erhöht werden kann.

Die Aufgabe wird gelöst durch eine Vorrichtung nach Anspruch 1 und ein Verfahren nach Anspruch 11.

Weiterbildungen der Erfindung sind in den Unteransprüchen gekennzeichnet.

Weitere Merkmale und Zweckmäßigkeiten der Erfindung ergeben sich aus der Beschreibung von Ausführungsbeispielen anhand der Figuren. Von den Figuren zeigen:
- Fig. 1: eine schematische Seitenansicht einer Vorrichtung ge- mäß einer ersten Ausführungsform der vorliegenden Er- findung;
- Fig. 2: eine schematische Darstellung einer Vorrichtung gemäß einer zweiten Ausführungsform der Erfindung;
- Fig. 3: eine schematische Darstellung einer Vorrichtung gemäß einer Abwandlung der zweiten Ausführungsform der Er- findung;
- Fig. 4: eine schematische Darstellung eines Verfahrensablaufs gemäß einer zweiten Ausführungsorm der Erfindung; und

### Erste Ausführungsform

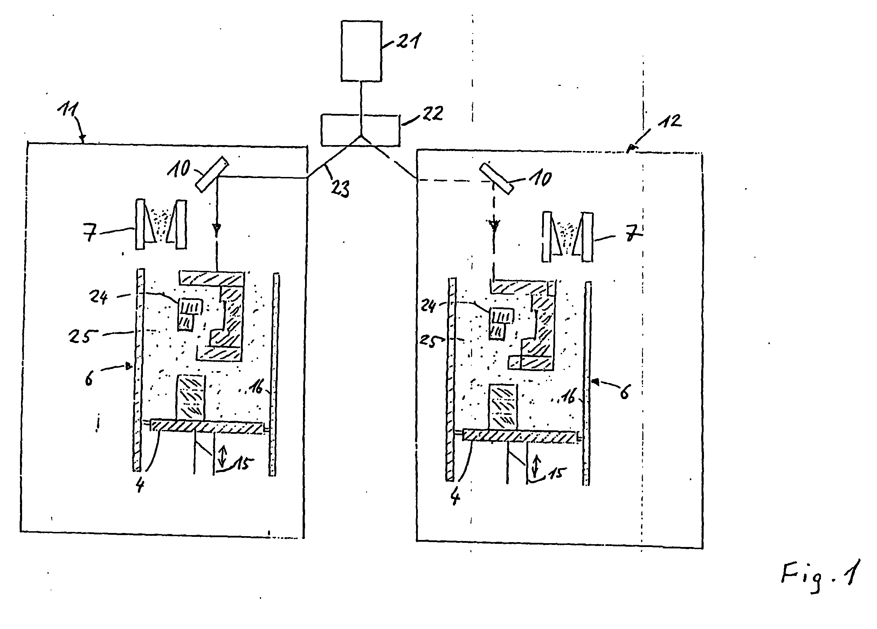

Fig. 1 zeigt eine Querschnittsansicht einer Lasersinteranlage als Beispiel einer Vorrichtung zur schichtweisen Herstellung von dreidimensionalen Objekten aus einem mittels elektromagnetischer Strahlung verfestigbaren Aufbaumaterial gemäß einer ersten Ausführungsform der Erfindung. Die Vorrichtung weist zwei Prozeßkammern 11 und 12 auf, in denen jeweils Objekte hergestellt werden. Dabei kann es sich um zwei voneinander räumlich separierte Prozeßkammern handeln oder aber um eine Doppelkammer, bei der jeder Teilbereich eine eigene Prozeßkammer darstellt. Jede der Prozeßkammern weist einen Baubehälter 6 mit einer Wandung 16 und einer Bauplattform 4 auf.

Die Bauplattform 4 ist mit einem Vertikalantrieb 15 verbunden, welcher eine Auf- und Abbewegung der Bauplattform 4 relativ zu dem Baubehälter in vertikaler Richtung ermöglicht.

Über dem Baubehälter 6 ist eine Materialauftragevorrichtung 7 zum Aufbringen des auf die Bauplattform 4 aufzubringenden Sinterpulvers angeordnet. Oberhalb der Materialauftragevorrichtung 7 ist eine Ablenkeinheit 10 angeordnet, die geeignet ist, einen gerichteten Strahl elektromagnetischer Strahlung, insbesondere Laserstrahlung auf beliebige Orte innerhalb einer aufgetragenen Schicht zu richten. Vorzugsweise handelt es -sich bei der Ablenkeinheit 10 um einen xy-Scanner oder einen Plotter.

Wie in Fig. 1 dargestellt, ist eine Strahlungsquelle 21 in Form eines Lasers außerhalb der Prozeßkammern 11 und 12 angeordnet. Der ausgesandte Laserstrahl wird über eine Umschalteinrichtung 22 entweder der einen Prozeßkammer 11 oder der anderen Prozeßkammer 12 zugeführt. Die Umschalteinrichtung 22 ist für den Fall, daß es sich bei der Strahlungsquelle 21 um einen Laser mit fasertransmissionsgeeigneten Eigenschaften handelt, z.B. einen NdYAG Laser , als Strahlweiche ausgebildet. Hierzu wird der Strahlweiche der Laserstrahl über eine Lichtleitfaser oder ein Lichtleitkabel zugeführt und über wahlweise mit.diesem verbindbare Lichtleitfasern bzw. Lichtleitkabel an die einzelnen Prozeßkammern weitergeleitet. Somit sind die Prozeßkammern über Lichtleitfasern bzw. Lichtleitkabel jeweils fest mit dem Laser verbunden. Die Umschalteinrichtung 22 kann aber auch als schaltbares optisches Element, insbesondere als ein Spiegel ausgebildet sein, wobei der Laserstrahl frei propagiert. Ferner zeigt Fig. 1 ein gebildetes Objekt 24, das von nicht verfestigtem Pulver 25 umgeben ist.

In einer Abwandlung ist eine Strahlteilereinrichtung vorgesehen, z.B. in Form eines regelbaren optischen Elements, die es erlaubt, den Strahl aus der Strahlungsquelle zu teilen und gleichzeitig beiden Kammern zuzuführen.

Die Vorrichtung der ersten Ausführungsform gestattet es, eine Strahlungsquelle für zwei verschiedene Prozeßkammern zu nutzen, was mehrere Vorteile für die Herstellung einer großen Stückzahl von Bauelementen mit sich bringt:

Wird nicht jede Prozeßkammer mit einer eigenen Strahlungsquelle versehen, führt dies zu einem deutlich geringeren Investitionsaufwand für die Erhöhung der Anzahl der Prozeßkammern.

Die Entkopplung von Strahlungsquelle und Prozeßkammer gestattet geringere Sicherheitsaufwendungen bei der Ausgestaltung der Prozeßkammer.

Durch die Entkopplung von Strahlungsquelle und Prozeßkammer ist der Platzbedarf für eine Prozeßkammer geringer.

Im Betrieb werden in den beiden Prozeßkammer 11, 12 zeitgleich Objekte hergestellt. Dabei wird der Laser 21 alternierend mit jeder der beiden Prozeßkammern 11, 12 verbunden. Insbesondere wird in der einen Prozeßkammer eine zuvor aufgetragene Schicht belichtet, während zeitgleich in der anderen Prozeßkammer auf eine zuvor selektiv bestrahlte Schicht eine neue Schicht aufgebracht wird und gegebenenfalls für die Bestrahlung vorbereitet wird, z.B. durch Vorheizung.

Das Verfahren gestattet eine gegenüber dem herkömmlichen verfahren effektivere Nutzung der Strahlungsquelle. Da die Strahlungsquelle jeweils während der Zeit des Schichtauftrags in einem Baubehälter in dem anderen Baubehälter für eine Belichtung benutzt wird, erhöht sich ihr Auslastungsgrad beträchtlich.

### Zweite Ausführungsform

Die Vorrichtung gemäß einer zweiten Ausführungsform unterscheidet sich von jener der ersten Ausführungsform darin, daß eine einzige Strahlungsquelle vier-Prozeßkammern zugeordnet ist. Diese können entweder in Form von räumlich voneinander getrennten Einzelkammern oder als Teilbereiche von zwei Doppelkammern oder einer Vierfachkammer vorliegen.

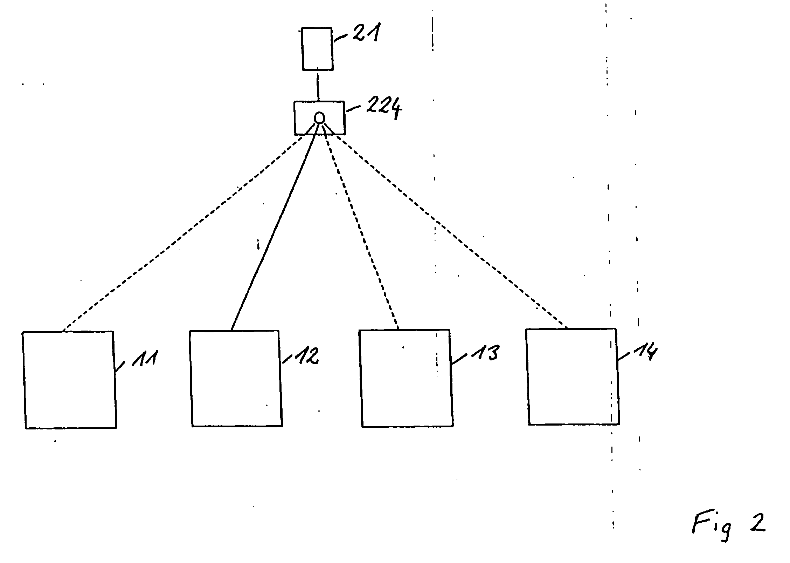

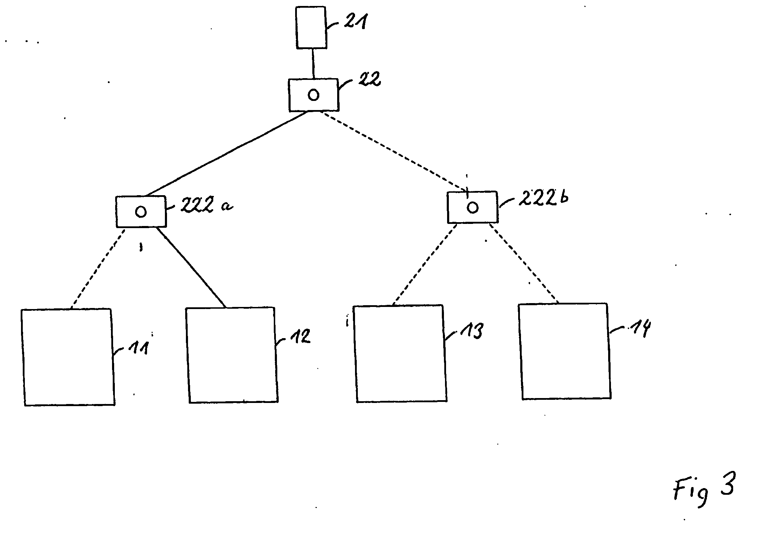

Fig. 2 zeigt schematisch eine Vorrichtung gemäß einer zweiten Ausführungsform der Erfindung. Wie aus Fig. 2 ersichtlich ist, ist der Laser 21 über eine Umschalteinrichtung 224 mit jeweils einer der Prozeßkammern 11, 12, 13, 14 verbindbar. Alternativ dazu kann, wie in Fig. 3 dargestellt, jeweils zwei Prozeßkammern eine Umschalteinrichtung 222a bzw. 222b zugeordnet sein, deren Eingang mit einem Ausgang einer der Strahlungsquelle 21 nachgeschalteten Umschalteinrichtung 22 verbunden ist.

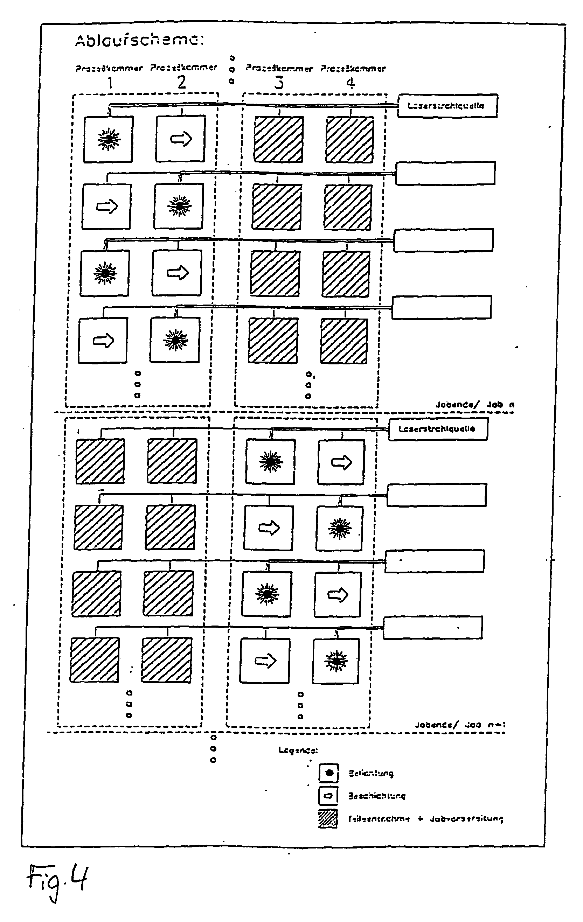

Fig. 4 zeigt ein Ablaufschema eines Verfahren gemäß einer zweiten Ausführungsform der Erfindung. Wie in der oberen Hälfte von Fig. 4 dargestellt, wird in den Prozeßkammern 11 und 12 zeitgleich ein Bauvorgang durchgeführt. Bei einem Aufbau gemäß Fig. 3 leitet hierzu die Umschalteinrichtung 22 die Strahlung der den Prozeßkammern 11 und 12 zugeordneten Umschalteinrichtung 222a zu. Die Umschalteinrichtung 222a führt dann die Strahlung alternierend jeder der beiden Prozeßkammern 11 und 12 zu. Insbesondere wird in der einen Prozeßkammer eine zuvor aufgetragene bzw. vorbereitete Schicht belichtet, während zeitgleich in der anderen Prozeßkammer auf eine zuvor selektiv belichtete Schicht eine neue Schicht vorbereitet wird. Während des Bauvorgangs in den beiden Prozeßkammern 11 und 12 werden in den beiden anderen Prozeßkammern 13 und 14 fertig gebaute Objekte den Prozeßkammern entnommen und ein neuer Bauvorgang in den Prozeßkammern vorbereitet.

Wie in der unteren Hälfte von Fig. 4 dargestellt, wird nach Beendigung des Bauvorgangs in den Prozeßkammern 11 und 12 ein neuer Bauvorgang in den Prozeßkammern 13 und 14 durchgeführt, während in den beiden Prozeßkammern 11 und 12 fertig gebaute Objekte den Prozeßkammern entnommen werden und ein neuer Bauvorgang vorbereitet wird. Bei einem Aufbau gemäß Fig. 4 leitet hierzu die Umschalteinrichtung 22 die Strahlung der den Prozeßkammern 13 und 14 zugeordneten Umschalteinrichtung 222b zu. Die Umschalteinrichtung 222b führt dann die Strahlung alternierend jeder der beiden Prozeßkammern 13 und 14 zu. Insbesondere wird in der einen Prozeßkammer eine zuvor aufgetragene Schicht belichtet, während zeitgleich in der anderen Prozeßkammer auf eine zuvor selektiv belichtete Schicht eine neue Schicht aufgetragen wird.

Die Umschalteinrichtungen 22, 222a bzw. 222b sind wie bereits bei der ersten Ausführungsform beispielsweise als schaltbare optische Elemente oder als Strahlweichen ausgeführt. Im letzteren Fall besteht dann zwischen der Strahlweiche 22 und dem Laser 21 einerseits und der Strahlweiche 222a bzw. 222b andererseits eine feste Verbindung über eine Lichtleitfaser oder ein Lichtleitkabel.

In einer weiteren Abwandlung sind mehr als vier Prozeßkammern und entsprechend dazu Umschalteinrichtungen vorgesehen.

Die beiden oben beschriebenen Ausführungsformen weisen ferner den vorteil auf, daß in den unterschiedlichen Prozeßkammern voneinander verschiedene Werkstoffpulver verwendet werden können. Ferner können zwei Chargen unmittelbar nacheinander produziert werden.

Die Erfindung ist bevorzugt anwendbar für das selektive Lasersintern bzw. das selektive Laserschmelzen, bei dem als zu verfestigendes Material ein Pulver verwendet wird. Sie ist aber nicht darauf beschränkt, sondern umfaßt auch die Verwendung eines flüssigen, lichthärtbaren Harzes, wie es aus der Stereolithographie bekannt ist oder die Verfestigung eines Pulvermaterials mittels Einwirkung eines Binders oder Bindersystems. Der Strahl besteht dabei aus Partikeln einesoder mehrerer Komponenten, der die Pulverkörner des Aufbaumaterials miteinander verbindet.

Außer der in den Ausführungsbeispielen beschriebenen Anzahl von Prozeßkammern kann auch jede beliebige Anzahl von Prozeßkammern bzw. Baubereichen oder Kombination der Anzahl der Strahlungsquellen und der zugehörigen Prozeßkammern bzw. Baubereichen vorgesehen sein. In den Prozeßkammern können verschiedene Werkstoffe, Prozeßbedingungen, wie z.B. Temperatur oder Druck oder umgebende Atmoshäre, oder Parameter wie z.B. die Laserleistung verwendet werden.

## Patentansprüche

1. Vorrichtung zum schichtweisen generativen Herstellen von dreidimensionalen Objekten unter Einwirkung von elektromagnetischer oder Teilchenstrahlung an den jeweiligen, dem Querschnitt des Objekts in der jeweiligen Schicht entsprechenden Stellen mit
einer Strahlungsquelle (21) zum Abgeben der elektromagnetischen oder der Teilchenstrahlung, **gekennzeichnet durch** wenigstens zwei voneinander getrennte Baubereiche (11, 12) für herzustellende Objekte,
eine Umschalteinrichtung (22, 222a, 222b) zum Umschalten der Strahlung zwischen den Baubereichen, derart, daß jeweils ein Baubereich bestrahlt wird, wobei die Umschalteinrichtung (22, 222a, 222b) ein schaltbares optisches Element oder eine Strahlweiche aufweist, und eine Steuereinrichtung, welche die Umschalteinrichtung derart steuert, dass während eines Prozessschrittes in einem Baubereich (11), der ohne Beteiligung der Strahlungsquelle abläuft, in einem anderen Baubereich (12) ein Prozessschritt mit Beteiligung der Strahlungsquelle abläuft.

2. Vorrichtung nach Anspruch 1, **dadurch gekennzeichnet, daß** die Baubereiche in getrennten Prozeßkammern (11, 12) vorgesehen sind.

3. Vorrichtung nach Anspruch 1 oder 2, **dadurch gekennzeichnet, daß** zum Einkoppeln und Auskoppeln der Strahlung optische Fasern mit der Umschalteinrichtung (22, 222a, 222b) verbunden sind.

4. Vorrichtung nach einem der Ansprüche 1 bis 3, **gekennzeichnet durch** eine Steuereinrichtung für die Umschalteinrichtung (22, 222a, 222b), die so ausgebildet ist, daß während der Verfestigung einer Schicht in dem einen Baubereich (11) in einem anderen Baubereich (12) andere Prozeßschritte wie z.B. Schichtauftrag, Beladen oder Entladen stattfinden.

5. Vorrichtung nach einem der Ansprüche 1 bis 4, **dadurch gekennzeichnet, daß** mehr als zwei Baubereiche (11, 12, 13, 14) vorgesehen sind, die entweder getrennten Prozeßkammern und/oder Teilbereichen von Mehrfachkammern zugeordnet sind.

6. Vorrichtung nach Anspruch 5, **dadurch gekennzeichnet, daß** wenigstens eine weitere Umschalteinrichtung (222a, 222b) vorgesehen ist, die die Strahlung zwischen den Baubereichen einer Mehrfachkammer umschaltet.

7. Vorrichtung nach einem der Ansprüche 2 bis 6, **dadurch gekennzeichnet, daß** wenigstens eine Prozeßkammer hermetisch dicht ausgebildet ist.

8. Vorrichtung nach einem der Ansprüche 2 bis 7, **dadurch gekennzeichnet, daß** die Prozeßkammer eine Heiz- oder eine Kühleinrichtung aufweist.

9. Vorrichtung nach einem der Ansprüche 1 bis 8, **dadurch gekennzeichnet, daß** die Strahlungsquelle als Laser ausgebildet ist.

10. Vorrichtung nach einem der Ansprüche 1 bis 8 **dadurch gekennzeichnet, daß** die Strahlungsquelle als Quelle zum Erzeugen eines Strahls an Partikeln eines Bindermaterials ausgebildet ist.

11. Verfahren zum schichtweisen generativen Herstellen von dreidimensionalen Objekten unter Einwirkung elektromagnetischer oder Teilchenstrahlung an den jeweiligen dem Querschnitt des Objekts in der jeweiligen Schicht entsprechenden Stellen
**dadurch gekennzeichnet, daß** während eines Prozeßschrittes in einem Baubereich (11), der ohne Beteiligung der Strahlung abläuft, in einem anderen Baubereich (12) ein Prozeßschritt mit Beteiligung der Strahlung stattfindet, wobei die Strahlung zwischen den Baubereichen mittels einer durch eine Steuereinrichtung gesteuerten Umschalteinrichtung, die ein schaltbares optisches Element und/oder eine Strahlweiche aufweist, umgeschaltet wird.

12. Verfahren nach Anspruch 11, **dadurch gekennzeichnet, daß** der Prozeßschritt mit Beteiligung der Strahlung ein Schritt des Verfestigens einer Schicht eines Aufbaumaterials mittels der Strahlung ist.

13. Verfahren nach Anspruch 11 oder 12, **dadurch gekennzeichnet, daß** der Prozeßschritt ohne Beteiligung der Strahlung einen Schichtauftrag, die Entnahme eines fertigen Objekts aus dem Baubereich oder Vorbereitungshandlungen für einen neuen Bauvorgang umfaßt.

14. Verfahren nach einem der Ansprüche 11 bis 13, bei dem die Objekte in einer Mehrzahl von Prozeßkammern (11, 12, 13, 14) hergestellt werden.

15. Verfahren nach Anspruch 14, bei dem die Anzahl der Prozeßkammern in zwei Gruppen unterteilt ist, wobei in der einen Gruppe von Prozeßkammern fertige Objekte den Prozeßkammern entnommen werden und/oder Prozeßkammern für einen Herstellungsvorgang vorbereitet werden, während in der anderen Gruppe von Prozeßkammern in einem Teil der Prozeßkammern eine Bestrahlung stattfindet und gleichzeitig in dem anderen Teil der Prozeßkammern ein Vorgang ohne Beteiligung der Strahlungsquelle stattfindet.

16. Verfahren nach Anspruch 15, bei dem nach Beendigung der Herstellungsvorbereitung in der einen Gruppe von Prozeßkammern in dieser Gruppe in einem Teil der Prozeßkammern dieser Gruppe eine Bestrahlung stattfindet und gleichzeitig in dem anderen Teil der Prozeßkammern dieser Gruppe ein Prozeßschritt des Vorbereitens einer Schicht stattfindet, während in der anderen Gruppe von Prozeßkammern fertige Objekte den Prozeßkammern entnommen werden oder Prozeßkammern für einen Herstellungsvorgang vorbereitet werden.

17. Verfahren nach einem der Ansprüche 11 bis 16, bei dem bei der Umschalteinrichtung die Einkopplung und Auskopplung der Strahlung mittels optischer Fasern stattfindet.

## Claims

1. Device for layerwise generative production of three-dimensional objects by acting of electromagnetic or particle radiation at respective positions corresponding to the cross-section of the object in the respective layer, comprising
a radiation source (21) for emitting the electromagnetic or particle radiation,
**characterized by**
at least two building regions (11, 12) which are separated from each other for objects to be produced;
a switching device (22, 222a, 222b) for switching the radiation between the building regions such that one building region is irradiated at a time, wherein the switching device (22, 222a, 222b) comprising a switchable optical element or a beam switch, and a control device which controls the switching device such that during a process step in one building region (11) which runs without participation of the radiation source, a process step with participation of the radiation source runs in another building region (12).

2. Device according to claim 1, **characterized in that** the building regions are provided in separate process chambers (11, 12).

3. Device according to anyone of claims 1 or 2, **characterized in that** optical fibers are connected to the switching device (22, 222a, 222b) for inputting and outputting of the radiation.

4. Device according to anyone of claims 1 to 3, **characterized by** a control device for the switching device (22, 222a, 222b) formed such that during the solidification of a layer in the one building region (11), other process steps such as application of a layer, loading or unloading take place in another building region (12).

5. Device according to anyone of claims 1 to 4, **characterized in that** more than two building regions (11, 12, 13, 14) are provided, which are assigned to either separate process chambers and/or partial regions of manifold-chambers.

6. Device according to claim 5, **characterized in that** at least one further switching device (222a, 222b) switching the radiation between the building regions of a manifold-chamber is provided.

7. Device according to anyone of claims 2 to 6, **characterized in that** at least one process chamber is formed hermetically impervious.

8. Device according to anyone of claims 2 to 7, **characterized in that** the process chamber comprises a heating or cooling device.

9. Device according to anyone of claims 1 to 8, **characterized in that** the radiation source is formed to be a laser.

10. Device according to anyone of claims 1 to 8, **characterized in that** the radiation source is formed to be a source for generating a beam of particles of a binder material.

11. Method for layerwise generative production of three-dimensional objects by acting of electromagnetic or particle radiation at respective positions corresponding to the cross-section of the object in the respective layer, **characterized in that** during a process step in one building region (11), which runs without participation of the radiation, a process step with participation of the radiation takes place in another building region (12), wherein the radiation is switched between the building regions by means of a switching device controlled by a control device and comprising a switchable optical element and/or a beam switch.

12. Method according to claim 11, **characterized in that** the process step with participation of the radiation is a step of solidifying a layer of a building material by means of the radiation.

13. Method according to anyone of claims 11 or 12, **characterized in that** the process step without participation of the radiation includes application of layers, removal of a completed object from the building region or acts of preparation for a new building operation.

14. Method according to anyone of claims 11 to 13, wherein the objects are produced in a plurality of process chambers (11, 12, 13, 14).

15. Method according to claim 14, **characterized in that** the quantity of process chambers is divided into two groups, wherein in one group of process chambers completed objects are removed from the process chambers and/or process chambers are prepared for a manufacturing operation, while in the other group of process chambers in a part of the process chambers an irradiation takes place and concurrently in the other part of the process chambers an operation without participation of the radiation source takes place.

16. Method according to claim 15, wherein, after completion of the preparation for manufacturing in the one group of process chambers, in this group in a part of the process chambers of this group an irradiation takes place and, concurrently, in the other part of the process chambers of this group a process step of preparing of a layer takes place, while in the other group of process chambers completed objects are removed from the process chambers or process chambers are prepared for a manufacturing operation.

17. Method according to anyone of claims 11 to 16, wherein the input and output of the radiation is performed by means of optical fibers in the switching device.

## Revendications

1. Dispositif pour la fabrication générative couche par couche d'objets tridimensionnels moyennant l'influence d'un rayonnement électromagnétique ou d'un rayonnement de particules au niveau des emplacements correspondants à la section de l'objet dans la couche respective, comportant
une source de rayonnement (21) destinée à émettre le rayonnement électromagnétique ou le rayonnement de particules,
**caractérisé par** au moins deux zones de fabrication (11, 12), séparées l'une de l'autre, pour les objets à réaliser, un dispositif de commutation (22, 222a, 222b) pour émettre le rayonnement dans l'une ou l'autre des zones de fabrication, de telle sorte que dans chaque cas une zone de fabrication est irradiée, le dispositif de commutation (22, 222a, 222b) comportant un élément optique commutable ou un déflecteur de rayon, et une unité de commande, par laquelle le dispositif de commutation est commandé de telle sorte que tandis que dans une zone de fabrication (11), une étape du processus se déroule sans la participation de la source de rayonnement, dans une autre zone de fabrication (12) se déroule une étape du processus avec la participation de la source de rayonnement.

2. Dispositif selon la revendication 1, **caractérisé en ce que** les zones de fabrication sont prévues dans des chambres de réalisation (11, 12) séparées.

3. Dispositif selon la revendication 1 ou 2, **caractérisé en ce que**, pour l'admission et la sortie du rayonnement, des fibres optiques sont reliées au dispositif de commutation (22, 222a, 222b).

4. Dispositif selon l'une quelconque des revendications 1 à 3, **caractérisé par** une unité de commande pour le dispositif de commutation (22, 222a, 222b), laquelle est réalisée de telle sorte que pendant la consolidation d'une couche dans l'une des zones de fabrication (11), d'autres étapes du processus, telles que le dépôt d'une couche, le chargement ou le déchargement, sont effectuées dans l'autre zone de fabrication (12).

5. Dispositif selon l'une quelconque des revendications 1 à 4, **caractérisé en ce qu'**il est prévu plus de deux zones de fabrication (11, 12, 13, 14), qui sont associées à des chambres de réalisation séparées et/ou à des zones partielles de chambres multiples.

6. Dispositif selon la revendication 5, **caractérisé en ce qu'**il est prévu au moins un dispositif de commutation (222a, 222b) supplémentaire, qui émet le rayonnement vers l'une ou l'autre des zones de fabrication d'une chambre multiple.

7. Dispositif selon l'une quelconque des revendications 2 à 6, **caractérisé en ce qu'**au moins une chambre de réalisation est conçue de manière hermétiquement étanche.

8. Dispositif selon l'une quelconque des revendications 2 à 7, **caractérisé en ce que** la chambre de réalisation comporte un dispositif de chauffage ou un dispositif de refroidissement.

9. Dispositif selon l'une quelconque des revendications 1 à 8, **caractérisé en ce que** la source de rayonnement est réalisée sous forme de laser.

10. Dispositif selon l'une quelconque des revendications 1 à 8, **caractérisé en ce que** la source de rayonnement est réalisée sous la forme d'une source destinée à générer un rayon de particules d'un matériau du type liant.

11. Procédé pour la fabrication générative couche par couche d'objets tridimensionnels moyennant l'influence d'un rayonnement électromagnétique ou d'un rayonnement de particules au niveau des emplacements correspondants à la section de l'objet dans la couche respective,
**caractérisé en ce que** tandis que dans une zone de fabrication (11), une étape du processus se déroule sans la participation de la source de rayonnement, dans une autre zone de fabrication (12) se déroule une étape du processus avec la participation de la source de rayonnement, le rayonnement pouvant être émis vers l'une ou l'autre des zones de fabrication au moyen d'un dispositif de commutation, qui est commandé par une unité de commande et qui comporte un élément optique commutable ou un déflecteur de rayon.

12. Procédé selon la revendication 11, **caractérisé en ce que** l'étape du processus avec la participation du rayonnement est une étape de consolidation d'une couche d'un matériau de fabrication au moyen d'un rayonnement.

13. Procédé selon la revendication 11 ou 12, **caractérisé en ce que** l'étape du processus sans la participation du rayonnement comporte le dépôt d'une couche, l'extraction d'un objet fini hors de la zone de fabrication ou des opérations de préparation pour un nouveau processus de fabrication.

14. Procédé selon l'une quelconque des revendications 11 à 13, dans lequel les objets sont réalisés dans une pluralité de chambres de réalisation (11, 12, 13, 14).

15. Procédé selon la revendication 14, dans lequel le nombre de chambres de réalisation est divisé en deux groupes, sachant que dans l'un des groupes de chambres de réalisation, les objets finis sont prélevés hors des chambres de réalisation, et/ou des chambres de réalisation sont préparées pour un processus de fabrication, tandis que dans l'autre groupe de chambres de réalisation, une irradiation est mise en oeuvre dans une partie des chambres de réalisation et en même temps, dans l'autre partie des chambres de réalisation, se déroule un processus sans la participation de la source de rayonnement.

16. Procédé selon la revendication 15, dans lequel, après la fin de la préparation de la fabrication dans l'un des groupes des chambres de réalisation, une irradiation est mise en oeuvre dans ce groupe dans une partie des chambres de réalisation de ce groupe et, en même temps, dans l'autre partie des chambres de réalisation de ce groupe est mise en oeuvre une étape du processus avec la préparation d'une couche, tandis que dans l'autre groupe de chambres de réalisation, des objets finis sont prélevés hors des chambres de réalisation ou les chambres de réalisation sont préparées pour un processus de fabrication.

17. Procédé selon l'une quelconque des revendications 11 à 16, dans lequel au niveau du dispositif de commutation se produisent l'admission et la sortie du rayonnement au moyen de fibres optiques.
